# EUROPEAN PATENT APPLICATION

(11) **EP 4 835 165 A1**
(43) Date of publication of application: **04.11.2026**
(21) Application number: 25210790.9
(22) Date of filing: 23.10.2025
(51) Int. Cl.: C25D 1/04, H01M 4/66, C25D 3/38

(54) **COPPER FOIL, AND ELECTRODE AND SECONDARY BATTERY INCLUDING THE SAME**

(30) Priority: 30.04.2025 KR 20250057671
(71) Applicant: SK Nexilis Co., Ltd., Jeollabuk-do 56137 (KR)
(72) Inventor: JIN, Shan Hua, Seoul 03142 (KR); KIM, Jinhyeok, Seoul 03142 (KR); KIM, Taeyeong, Seoul 03142 (KR)
(74) Representative: Prüfer & Partner mbB Patentanwälte · Rechtsanwälte

(57) **Abstract**

Disclosed are a copper foil and an electrode and secondary battery including the same, the copper foil including a copper layer, wherein the copper foil has an elongation change value of -3 % to +1 % according to Measurement Method 1 below:

[Measurement Method 1]

1) For the copper foil, a first elongation is measured using a universal testing machine from Instron Corp. according to IPC-TM-650
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

## Description

### BACKGROUND OF THE INVENTION

### Field of the Disclosure

The present disclosure relates to a copper foil and an electrode and secondary battery including the same.

### Description of the Related Art

A secondary battery, as an energy storage device, is widely used in various applications such as portable devices, electric vehicles, and energy storage systems (ESS). In particular, as high energy density and high power characteristics are simultaneously required, advanced technological development for the structures and constituent materials of electrodes is continuously ongoing.

Generally, a negative electrode is formed by applying a slurry composed of an active material, a binder, and a conductive agent onto a current collector, and then subjecting it to drying and roll-press processes. As the current collector, a copper foil, which has excellent electrical conductivity and is easy to process, is widely used.

Recently, as the demand for higher density and reduced thickness of electrodes has increased, design conditions such as an increase in the coating amount of an active material, an improvement in electrode density, and a reduction in electrode thickness are becoming progressively more advanced. Accordingly, various performance requirements such as mechanical durability, process adaptability, surface precision, and coating uniformity are being simultaneously imposed on copper foil.

In particular, during electrode manufacturing, the copper foil is repeatedly subjected to high-pressure roll press and the active material is repeatedly subjected to a compressive load, which may cause various process-related problems such as reduced mechanical stability, wrinkling, tearing, softening, and the generation of surface defects.

Therefore, as electrode manufacturing conditions become more advanced, research aimed at optimizing multifaceted characteristics of the copper foil, such as its thickness, crystal structure, surface roughness, chemical stability, and residual stress, is being actively conducted.

### SUMMARY OF THE DISCLOSURE

Therefore, the present disclosure has been made in view of the above problems, and it is one object of the present disclosure to provide a copper foil which can stably maintains its elongation before and after the formation of an active material layer and has improved mechanical properties and battery characteristics, and an electrode and a secondary battery including the copper foil.

In accordance with an aspect of the present disclosure, the above and other objects can be accomplished by the provision of a copper foil, including a copper layer, wherein an elongation change value according to Measurement Method 1 is -3 % to +1 %.

### [Measurement Method 1]

1) For the copper foil, a first elongation is measured using a universal testing machine from Instron Corp. according to IPC-TM-650
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

In an embodiment of the present disclosure, the elongation change value may be -2 % to + 0.5 %.

In an embodiment of the present disclosure, the first elongation may be 2 % to 15 %.

In an embodiment of the present disclosure, the copper layer may include a stress-relief agent including a cellulose derivative and a crystal growth regulator including a non-ionic water-soluble polymer.

In an embodiment of the present disclosure, the copper foil may include a protective layer formed on at least one surface of the copper layer, wherein the protective layer includes at least one of a chromium compound, a silane compound, and a nitrogen compound.

In an embodiment of the present disclosure, a Strength-Elongation Index (SEI) according to Equation 2 below may be 150 to 350: [Equation 2] $SEI \left(unit omitted\right) = TS \left(kgf/{mm}^{2}\right) \times E 1 \left(%\right)$ where TS is a tensile strength of the copper foil at room temperature, and El the First elongation, where TS is measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.

In an embodiment of the present disclosure, a Relative Elongation Index (REI) according to Equation 3 below may be 0.05 to 0.15: [Equation 3] $REI \left(unit omitted\right) = E 1 \left(%\right) / TS \left(kgf/{mm}^{2}\right)$
where TS is a tensile strength of the copper foil at room temperature, and El the First elongation,
where TS is measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.

In accordance with another aspect of the present disclosure, there is provided an electrode, including a current collector including a copper foil and an active material layer formed on at least one surface of the current collector, wherein the copper foil includes a copper layer, and an elongation change value according to Measurement Method 1 is -3 % to +1 %:

### [Measurement Method 1]

1) For the copper foil, a first elongation is measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

In an embodiment of the present disclosure, an Electrode Stress Index (ESI) according to Equation 4 below may be 5 or more: [Equation 4] 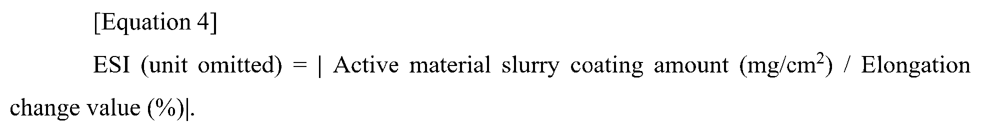 ESI (unit omitted) = | Active material slurry coating amount (mg/cm2) / Elongation change value (%)|. In Equation 4, a case where the elongation change value is 0 is excluded.

In an embodiment of the present disclosure, a ratio of the thickness of the current collector to the total thickness of the electrode may be 1 % to 12 %.

In accordance with yet another aspect of the present disclosure, there is provided a secondary battery, including a negative electrode, a positive electrode, an electrolyte, and a separator interposed between the negative electrode and positive electrode, wherein the negative electrode includes a current collector including a copper foil, the copper foil includes a copper layer, and an elongation change value according to Measurement Method 1 is -3 % to +1 %:

### [Measurement Method 1]

1) For the copper foil, a first elongation is measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

In an embodiment of the present disclosure, a contact angle between the negative electrode and the electrolyte may be 50° or less.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates the sectional view of a copper foil according to an embodiment;
FIG. 2 schematically illustrates the sectional view of a negative electrode according to an embodiment;
FIG. 3 schematically illustrates the sectional view of a secondary battery according to an embodiment; and
FIG. 4 schematically illustrates an apparatus for manufacturing a copper foil according to an embodiment.

### DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the specification, when a certain part "includes" a certain component, this indicates that the part may further include another component instead of excluding another component unless there is no different disclosure. In addition, it should be understood that all numerical ranges representing physical property values, dimensions, etc. of components described in the present specification or application are modified by the term 'about' in all cases unless otherwise specified. Further, in the present specification or application, 'ppm' means on a weight basis. Additionally, in the present specification or application, 'derived' means to indicate a component or structure originating from a certain substance, or the substance itself.

In addition, in the present specification or application, terms such as "below," "beneath," "lower," "above," and "upper" may be used to easily describe the correlation between one element or component and another, as illustrated in the drawings. The spatially relative terms should be understood as terms that include different orientations of a device during use or operation, in addition to the orientation shown in the drawings. For example, when a device shown in the drawings is turned over, a device described as "below" or "beneath" another device may be placed "above" the other device. Accordingly, the exemplary term "below" or "beneath" may encompass both orientations of below and above. Likewise, the exemplary term "above" or "upper" may encompass both orientations of above and below.

Hereinafter, a copper foil according to the present disclosure and an electrode and secondary battery including the copper foil are described.

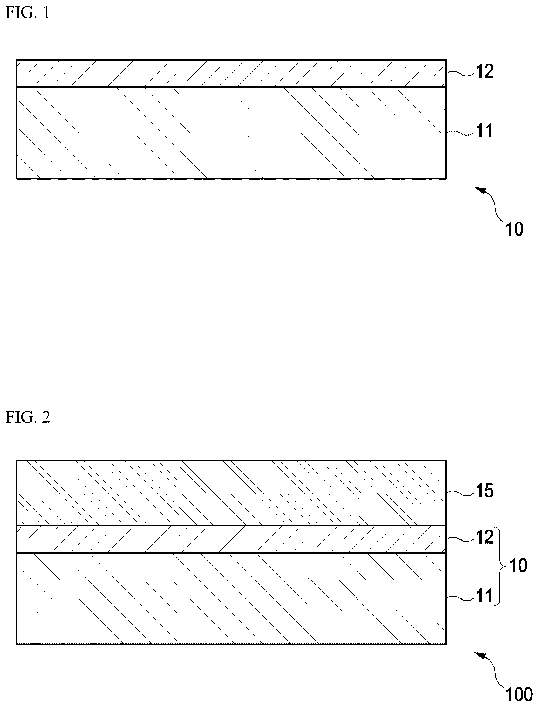

FIG. 1 schematically illustrates the sectional view of a copper foil according to an embodiment.

A copper foil 10 according to the present disclosure may include a copper layer 11. The copper layer 11 may include 99 % by weight or more, 99.3 % by weight or more, 99.6 % by weight or more, or 99.9 % by weight or more of copper (Cu).

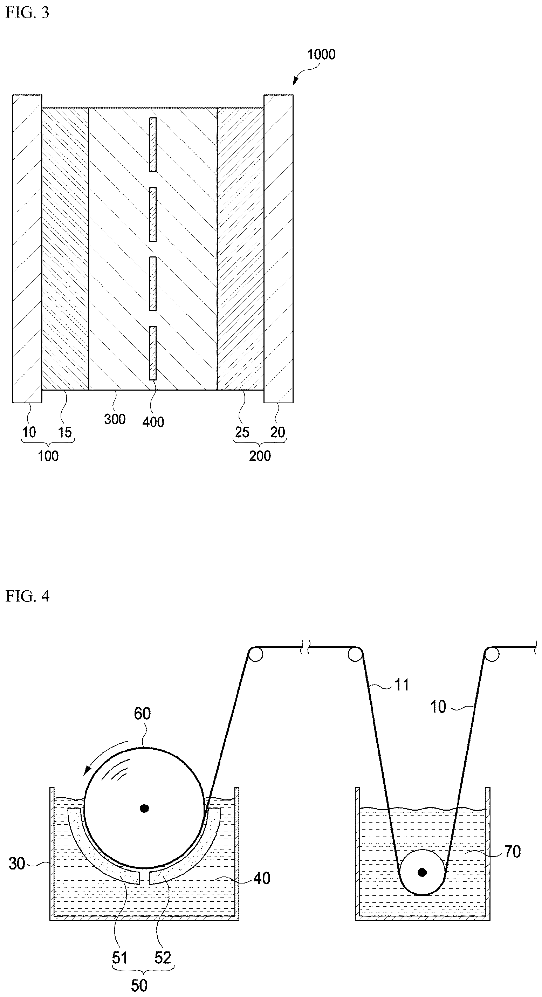

The copper layer 11 may be formed on a rotating cathode drum through electroplating. The copper layer 11 may have a shiny side that is in direct contact with the rotating cathode drum during the electroplating process, and a matte side which is the opposite side. Specifically, the copper layer 11 may be formed by an apparatus for manufacturing a copper foil of FIG. 4, which will be described below.

The copper layer 11 may include a stress-relief agent containing a cellulose derivative and a crystal growth regulator containing a non-ionic water-soluble polymer. The stress-relief agent may relieve the stress of the copper foil 10 including the copper layer 11 to improve flexibility. The crystal growth regulator may control the crystal growth direction of the copper layer 11 to suppress pinhole defects and form a microcrystalline structure. As a result, the wettability of the electrolyte and the negative electrode surface, to be described below, may be improved. The stress-relief agent and the crystal growth regulator may be derived from components included in an electrolyte solution during the manufacturing process of the copper layer 11, which will be described below. The stress-relief agent and the crystal growth regulator may be identified by Time-of-Flight Secondary Ion Mass Spectrometry (ToF-SIMS), X-ray Photoelectron Spectroscopy (XPS), and/or thermal analysis-mass spectrometry (TGA-MS or Pyrolysis-GC/MS).

The stress-relief agent may include a cellulose derivative, and the type of the cellulose derivative may be at least one selected from the group consisting of hydroxyethylene cellulose (HEC), hydroxypropyl cellulose (HPC), ethyl cellulose (EC), carboxymethyl cellulose (CMC), hydroxypropyl methylcellulose (HPMC), and methyl cellulose (MC).

The weight average molecular weight of the cellulose derivative may be 300,000 g/mol or less, 1,000 g/mol to 300,000 g/mol, or 200,000 g/mol to 300,000 g/mol. When this range is satisfied, mechanical damage such as wrinkling, tearing, and fracture of the copper foil 10 may be suppressed.

The crystal growth regulator may include a non-ionic water-soluble polymer, and the type of the non-ionic water-soluble polymer may be at least one selected from the group consisting of polyethylene glycol (PEG), polyvinyl alcohol (PVA), polypropylene glycol (PPG), polyacrylamide (PAM), polyoxyethylene (POE), and polyvinylpyrrolidone (PVP).

The weight average molecular weight of the non-ionic water-soluble polymer may be 1,000 g/mol to 10,000 g/mol, 1,000 g/mol to 8,000 g/mol, or 2,000 g/mol to 8,000 g/mol.

The copper foil 10 may include a protective layer 12 formed on at least one surface of the copper layer 11. The protective layer 12 formed on one surface of the copper layer 11 is illustrated in FIG. 1, but the protective layer 12 may be formed on both surfaces of the copper layer 11.

The protective layer 12 may include at least one of a chromium compound, a silane compound, and a nitrogen compound. The protective layer 12 may prevent the oxidation and corrosion of the copper layer 11 and improve heat resistance thereof, thereby extending the lifespan of the copper foil 10 and the lifespan of a product including the copper foil 10.

The copper foil 10 may have an elongation change value of -3 % to +1 % according to Measurement Method 1 below:

### [Measurement Method 1]

1) For the copper foil, a first elongation is measured using a universal testing machine from Instron Corp. according to IPC-TM-650.
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below. [Equation 1] $Elongation change value = Second elongation - First elongation$

The elongation change value may be an index indicating a mechanical properties retention rate in a process where an active material layer is formed on the copper foil 10. The elongation change value may be an index indicating interfacial stability between the copper foil 10 and the active material layer. The elongation change value may be a structural stability index during charging and discharging of a secondary battery including the copper foil 10. The elongation change value may be an index for manufacturing process stability of a secondary battery using the copper foil 10. The elongation change value may be controlled depending upon the composition of an electrolyte solution, the content of each composition, and manufacturing process conditions in a manufacturing process of a copper foil to be described below.

The elongation change value may be -3 % to +1 %, -3 % to +0.5 %, -2 % to +0.5 %, or - 1.6 % to +0.2 %.

The first elongation may be 2 % to 15 %, 4 % to 15 %, 4.4 % to 15 %, 4.4 % to 14.8 %, or 4.4 % to 14.5 %.

The second elongation may be 2 % to 15 %, 2.8 % to 15 %, 2.8 % to 14 %, or 2.8 % to 13.2 %.

When the range is satisfied, the mechanical damage such as wrinkles, tearing, and fracture of the copper foil 10 in the active material layer forming process may be prevented. In addition, the adhesion of the copper foil 10 may be maintained at an interface with the active material layer, and stress concentration may be dispersed to reduce electrical contact resistance. Further, stress may be absorbed at the interface, so that peel resistance may be improved.

The copper foil 10 may have a Strength-Elongation Index (SEI) of 150 to 350 according to Equation 2 below: [Equation 2] $SEI \left(unit omitted\right) = TS \left(kgf/{mm}^{2}\right) \times E 1 \left(%\right)$

In Equation 2, TS is a tensile strength of the copper foil at room temperature, and El is an elongation of the copper foil at room temperature.

TS is a result of measurement for the copper foil 10 using a universal testing machine from Instron Corp. based on IPC-TM-650 under conditions of a length of 50 mm, a width of 12.7 mm, and a test speed of 50 mm/min.

SEI, as a composite physical property of strength and elongation, may be an index for performing a smooth lamination process without cracks in the active material layer after the active material layer is formed. SEI may be an index for electrode fracture resistance against expansion stress of an active material layer. SEI may be a balance index between structural maintenance of an electrode and flexibility thereof.

SEI may be 150 to 350, 160 to 350, 170 to 350, or 170 to 340. When the range is satisfied, mechanical damage such as wrinkles, tearing, and fracture of the copper foil 10 after the active material layer forming process may be prevented.

The copper foil 10 may have a Relative Elongation Index (REI) of 0.05 to 0.15 according to Equation 3 below: [Equation 3] $REI \left(unit omitted\right) = E 1 \left(%\right) / TS \left(kgf/{mm}^{2}\right)$

In Equation 3, TS is a tensile strength of the copper foil at room temperature, and El is an elongation of the copper foil at room temperature.

REI is a physical property indicating an elongation per 1 kgf/mm² of the copper foil 10, and REI may be an index indicating an elongation per unit structural strength of the copper foil 10. REI may be an index of energy dispersion capability at the time of stress concentration of the copper foil 10.

REI may be 0.05 to 0.15, 0.06 to 0.15, 0.08 to 0.15, or 0.1 to 0.15. When the range is satisfied, a peeling phenomenon and interlayer separation phenomenon of an electrode including the copper foil 10 may be suppressed.

FIG. 2 schematically illustrates the sectional view of a negative electrode according to an embodiment.

An electrode according to the present disclosure may include a current collector including the copper foil 10; and an active material layer formed on at least one surface of the current collector.

The electrode may be a negative electrode 100. The active material layer may be a negative electrode active material layer 15.

The copper foil 10 may include the copper layer 11, and may have an elongation change value of -3 % to +1 % according to Measurement Method 1 below:

### [Measurement Method 1]

1) For the copper foil, a first elongation is measured using a universal testing machine from Instron Corp. according to IPC-TM-650
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

The copper foil 10 may include a protective layer 12 formed on at least one surface of the copper layer 11. The copper foil, the copper layer, the protective layer, and the elongation change value according to Measurement Method 1 may be the same as the copper foil, copper layer and protective layer described above and the elongation change value according to Measurement Method 1.

In FIG. 2, the protective layer 12 and negative electrode active material layer 15 formed on one surface of the copper layer 11 are illustrated, but the protective layer 12 and the negative electrode active material layer 15 may be formed on both surfaces of the copper layer 11.

The electrode may have an Electrode Stress Index (ESI) of 5 or more according to Equation 4 below: [Equation 4] 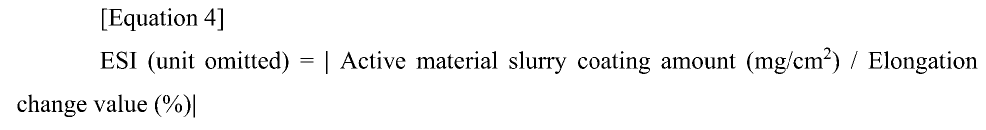 ESI (unit omitted) = | Active material slurry coating amount (mg/cm2) / Elongation change value (%)|

In Equation 4, a case where the elongation change value is 0 is excluded.

ESI may be an index indicating mechanical stability with respect to the load of an active material. As ESI is higher, a change in the elongation of the copper foil 10 is smaller despite an increase in the load of the active material, and as a result, excellent mechanical properties may be maintained.

ESI may be 5 or more, 5.2 or more, 5.3 or more, or 5 to 15. When the range is satisfied, the elongation retention rate of the copper foil 10 is excellent, so that mechanical properties may be stably maintained even when the load of the active material increases.

A ratio of the thickness of the current collector to the total thickness of the electrode may be 1 % to 12 %, 3 % to 12 %, 5 % to 12 %, or 6 % to 12 %. When the range is satisfied, the mechanical support of the negative electrode active material layer 15 may be maintained, and the energy density may be improved.

The negative electrode active material layer 15 may include a negative electrode active material.

The type of the negative electrode active material is not particularly limited, and a compound capable of reversible intercalation and deintercalation of lithium may typically be used. For example, carbonaceous materials such as artificial graphite, natural graphite, graphitized carbon fiber, amorphous carbon, and highly crystalline carbon; or metallic compounds capable of alloying with lithium such as Si, Al, Sn, Pb, Zn, Bi, In, Mg, Ga, Cd, a Si alloy, a Sn alloy, or an Al alloy may be used. Examples of low-crystalline carbon may include soft carbon and hard carbon, and examples of high-crystalline carbon may include high-temperature fired carbons such as natural graphite, kish graphite, pyrolytic carbon, mesophase pitch based carbon fiber, meso-carbon microbeads, mesophase pitches, and petroleum or coal tar pitch derived cokes. As the negative electrode active material, a composite including a metallic compound and a carbonaceous material may be used as needed.

The negative electrode active material may be mixed with a binder and a conductive agent to be formed as the negative electrode active material layer 15.

The binder may improve the binding force between the negative electrode active material and a conductive agent, and may improve the binding force between the negative electrode active material layer 15 and the copper foil 10.

The type of binder is not particularly limited, but for example, polyvinylidene fluoride (PVDF), polytetrafluoroethylene (PTFE), fluorine rubber, styrene-butadiene rubber (SBR), cellulose-based resin, and the like may be used.

The conductive agent may improve the conductivity of the negative electrode active material. The type of conductive agent is not particularly limited, but for example, Super-P, graphite, acetylene black, and the like may be used.

The electrode may include a primer layer disposed between the copper foil 10 and the negative electrode active material layer 15.

The primer layer may improve the interfacial adhesion between the copper foil 10 and the negative electrode active material layer 15.

The primer layer may include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

The primer layer may include a binder. The binder may include at least one selected from the group consisting of styrene-butadiene rubber, polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorine rubber, styrene (styrene monomer: SM), butadiene (BD), and butyl acrylate (BA).

The primer layer may include at least one conductive agent selected from the group consisting of natural graphite, artificial graphite, carbon black, acetylene black, Ketjen black, channel black, furnace black, lamp black, thermal black, carbon fiber, metal fiber, fluorocarbon, aluminum powder, nickel powder, zinc oxide, potassium titanate, titanium oxide, and polyphenylene derivatives to improve conductivity.

FIG. 3 schematically illustrates the sectional view of a secondary battery according to an embodiment.

The secondary battery 1000 according to the present disclosure includes a negative electrode 100, a positive electrode 200, an electrolyte 300, and a separator 400 interposed between the negative electrode 100 and the positive electrode 200, the negative electrode 100 includes a current collector including the copper foil 10, the copper foil 10 includes a copper layer, and an elongation change value according to Measurement Method 1 may be -3 % to +1 %.

### [Measurement Method 1]

1) For the copper foil, a first elongation is measured using a universal testing machine from Instron Corp. according to IPC-TM-650
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

The negative electrode 100 and the elongation change value according to Measurement Method 1 may be the same as the aforementioned negative electrode and the elongation change value according to Measurement Method 1.

The positive electrode 200 may include a structure in which a positive electrode active material layer 25 is formed on a positive electrode current collector 20.

The positive electrode 200 may be manufactured by a general method known in the art. For example, the positive electrode 200 may be manufactured by preparing a slurry by mixing and stirring a positive electrode active material, a solvent, a binder, a conductive agent, and a dispersant, and then applying the slurry onto the positive electrode current collector 20, compressing, and drying.

The positive electrode current collector 20 is a metal with high conductivity and is not particularly limited as long as it is a metal to which the slurry of the positive electrode active material can easily adhere and which has high conductivity without causing a chemical change in the secondary battery. For example, stainless steel, aluminum, nickel, titanium, sintered carbon, or a surface-treated material thereof with carbon, nickel, titanium, silver, or the like on the surface of aluminum or stainless steel may be used. In addition, fine irregularities may be formed on the surface of the positive electrode current collector to increase the adhesion of the positive electrode active material. The positive electrode current collector 20 may be used in various forms such as a film, a sheet, a foil, a net, a porous body, a foam, and a non-woven fabric body, and may have a thickness of 3 µm to 500 µm.

The positive electrode active material is a compound capable of reversible intercalation and deintercalation of lithium, and specifically, may include a lithium composite metal oxide including lithium and at least one metal such as cobalt, manganese, nickel, or aluminum.

The electrolyte 300 may be a non-aqueous electrolyte. The electrolyte 300 may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

The separator 400 may be configured to prevent an electrical short circuit between the negative electrode 100 and the positive electrode 200 and to allow a flow of ions. The separator 400 may include a porous polymer film or a porous non-woven fabric. Here, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the present disclosure is not limited thereto, and according to an embodiment, the separator may be a high-heat-resistance separator including ceramic (CCS; Ceramic Coated Separator).

A contact angle between the negative electrode 100 and the electrolyte 300 may be 50° or less, 45° or less, 40° or less, or 10° to 50°. The contact angle may be measured according to ASTM D7334. When the range is satisfied, the surface wettability of the negative electrode 100 is excellent, so that the uniformity of a Solid Electrolyte Interphase (SEI) layer may be improved, and the initial power characteristics and life stability of the secondary battery 1000 may be improved.

FIG. 4 schematically illustrates an apparatus for manufacturing a copper foil according to an embodiment.

The copper foil 10 according to the present disclosure may be manufactured by the apparatus for manufacturing a copper foil.

The method of manufacturing the copper foil 10 may include a step of forming the copper layer 11 and a step of forming a protective layer 12 on the copper layer 11.

The apparatus for manufacturing the copper foil 10 may include an electrolytic bath 30 for containing an electrolyte solution 40, a positive electrode plate 50 including a first positive electrode plate 51 and a second positive electrode plate 52, and a rotating cathode drum 60.

The first positive electrode plate 51 and the second positive electrode plate 52 may be electrically insulated from each other.

The formation of the copper layer 11 may be carried out by forming a seed layer through energization between the first positive electrode plate 51 and the rotating cathode drum 60, and growing the seed layer through energization between the second positive electrode plate 52 and the rotating cathode drum 60.

A current density provided by each of the first positive electrode plate 51 and the second positive electrode plate 52 may be 40 ASD to 130 ASD, 45 ASD to 130 ASD, 45 ASD to 125 ASD, or 45 ASD to 120 ASD. When the range is satisfied, the formation of the negative electrode active material layer 15 on the copper foil 10 may be smoothly performed, and sufficient adhesive force may be imparted between the copper foil 10 and the negative electrode active material layer 15.

The surface characteristics of the copper layer 11 may be controlled according to the degree of surface buffing or polishing of the rotating cathode drum 60. For example, the surface of the rotating cathode drum 60 may be polished with a polishing brush having a grit of #800 to #3000.

During the formation process of the copper layer 11, the temperature of the electrolyte solution 40 may be maintained at 45 °C to 65 °C, 47 °C to 65 °C, 47 °C to 63 °C, or 47 °C to 60 °C. Depending on the temperature of the electrolyte solution 40, the size, crystal orientation, and electrodeposition rate of copper crystal grains may vary, and thereby mechanical properties and surface roughness may be controlled.

The electrolyte solution 40 may include copper ions, an inorganic acid, and an additive. The electrolyte solution 40 may include chlorine. The inorganic acid may include sulfuric acid.

The content of the copper ions in the electrolyte solution 40 may be 70 g/L to 150 g/L, 70 g/L to 110 g/L, 70 g/L to 100 g/L, or 70 g/L to 90 g/L.

The copper ions contained in the electrolyte solution 40 may be from a copper wire with a purity of 99.9% or more, which is pickled in 10% sulfuric acid for 10 to 20 minutes and then undergoes a water washing process with distilled water. The water washing process may prevent the pickled organic matter from entering the electrolyte solution 40. The concentration of the organic matter may be controlled by a filtration process using a medium such as diatomaceous earth or carbon.

The content of the sulfuric acid in the electrolyte solution 40 may be 80 to 130 g/L, 85 to 130 g/L, 90 to 130 g/L, or 90 to 125 g/L.

The chlorine may include chlorine ions and chlorine atoms. The chlorine may be used to remove silver (Ag) ions that have entered the electrolyte solution 40 during the process of forming the copper layer 11. The chlorine may precipitate the silver ions in the form of silver chloride (AgCl). The silver chloride may be removed by filtration.

The concentration of the chlorine may be 15 ppm to 30 ppm. When the range is satisfied, the removal of silver ions may be smoothly performed, and unnecessary reactions due to excess chlorine may be suppressed.

The additive may include a stress-relief agent including a cellulose derivative and a crystal growth regulator including a non-ionic water-soluble polymer. The stress-relief agent and the crystal growth regulator may be the same as the stress-relief agent and crystal growth regulator described above.

A total concentration of the stress-relief agent and the crystal growth regulator may be 0.1 ppm to 10 ppm, 0.5 ppm to 10 ppm, 1 ppm to 10 ppm, or 2 ppm to 10 ppm.

A content ratio of the stress-relief agent:the crystal growth regulator may be 1:5 to 1:10, 1:5.2 to 1:10, 1:5.2 to 1:9.8, or 1:5.5 to 1:9.5.

When the range is satisfied, stress of the copper foil 10 including the copper layer 11 may be relieved to improve flexibility. In addition, the crystal growth direction of the copper layer 11 is controlled to suppress pinhole defects, and a microcrystalline structure may be formed. As a result, wettability of the electrolyte and the surface of the negative electrode may be improved.

The additive may include a first additive that can impart surface gloss, stress reduction, and leveling functions to the copper layer 11.

By the first additive, the amount of charge in the electrolyte solution 40 may be increased to increase the electrodeposition rate of copper ions, the curl characteristics of the manufactured copper foil 10 may be improved, and the gloss of the copper foil 10 may be enhanced.

The concentration of the first additive may be 1 ppm to 20 ppm, 2 ppm to 20 ppm, 3 ppm to 20 ppm, or 3 ppm to 18 ppm. When the range is satisfied, the surface roughness of the manufactured copper foil 10 may be maintained, and the gloss may be improved.

The first additive may include sulfonic acid or a metal salt thereof.

The first additive may include at least one of bis-(3-sulfopropyl)-disulfide disodium salt, diethylenetriaminepenta(methylenesulfonic acid), 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The additive may include a second additive that can provide functions of relaxing the deposition rate of the copper layer 11 and improving the uniformity thereof.

The second additive may prevent a sharp increase in roughness of the copper layer 11 and a decrease in strength thereof.

The concentration of the second additive may be 0.1 ppm to 20 ppm, 0.1 ppm to 15 ppm, 0.1 ppm to 12 ppm, or 1 ppm to 10 ppm. When the range is satisfied, the manufactured copper foil 10 may be prevented from being wrinkled and torn, and appearance, gloss, strength, and elongation properties may be maintained.

The second additive may include a non-ionic water-soluble polymer. The second additive may be a compound different from the aforementioned stress-relief agent and crystal growth regulator.

The second additive may include at least one of polyethylene-polypropylene copolymers, polyglycerin, polyethylene glycol dimethyl ether, stearic acid polyglycol ether, and stearyl alcohol polyglycol ether.

The additive may include a third additive that can prevent clogging of electrodeposition in a fine pattern of the copper layer 11, so that flatness can be maintained.

By the third additive, electrodeposition may be suppressed in a region where the local current density of the copper layer 11 is high, whereby a leveling action of making the surface of the copper layer 11 flat may be performed.

The concentration of the third additive may be 1 ppm to 10 ppm, 1 ppm to 9.5 ppm, or 1 ppm to 9 ppm. When the range is satisfied, the surface gloss of the manufactured copper foil 10 is uniform, and a phenomenon in which the surface roughness sharply increases may be suppressed.

The third additive may include a nitrogen-containing heterocyclic quaternary ammonium salt or its derivative.

The third additive may include at least one of compounds represented by Formulas 1 to 5 below:

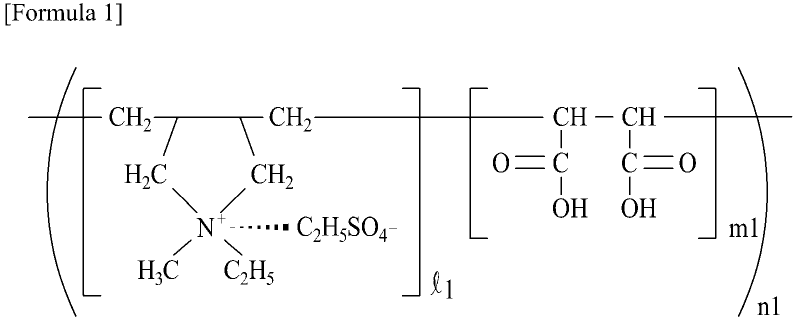

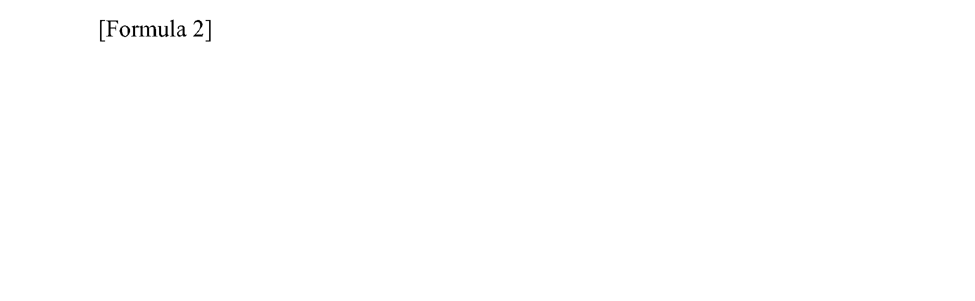

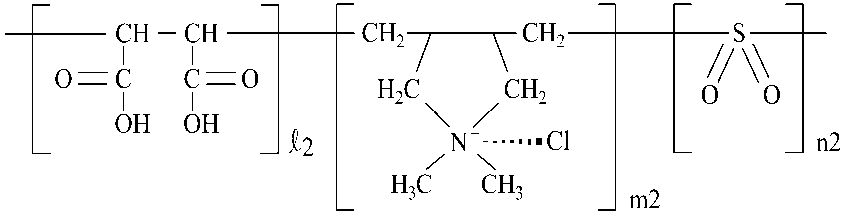

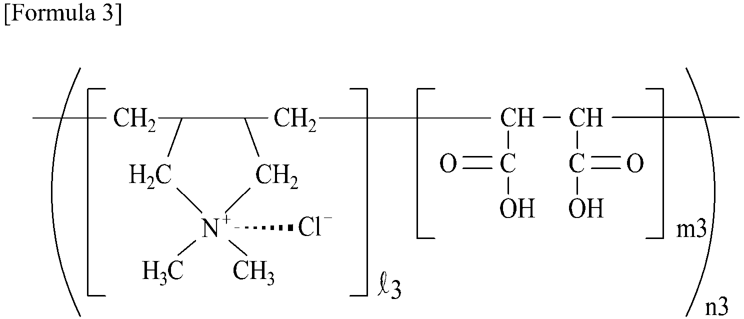

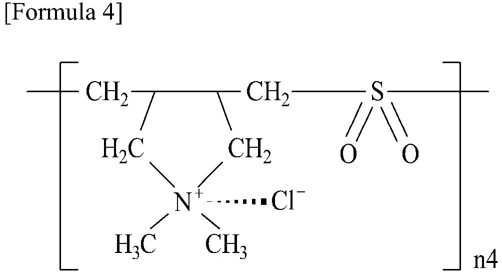

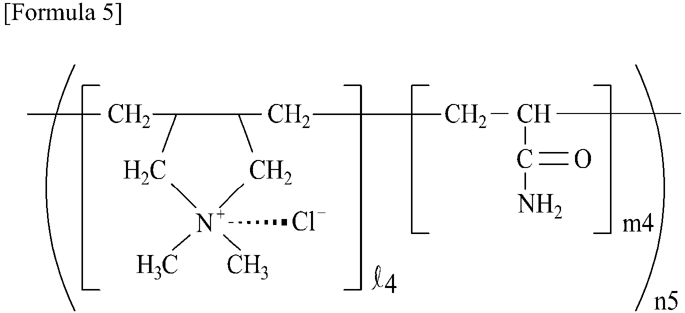

In Formulas 1 to 5, ℓ1 to ℓ4, m1 to m4, and n1 to n5 each represent a repeating unit, are integers of 1 or more, and may be the same as or different from each other.

Each of the compounds represented by Formulas 1 to 5 may have a number average molecular weight of 500 g/mol to 12,000 g/mol. When the range is satisfied, an increase in the deviation of surface roughness may be suppressed, so that the glossiness and flatness of the copper layer 11 may be improved.

The compounds represented by Formulas 1 to 5 may be prepared by polymerization or copolymerization using Diallyl Dimethyl Ammonium Chloride (DDAC). The compound represented by Formula 1 may be PAS-2451 (Mw 30,000 g/mol, from Nittobo). The compound represented by Formula 2 may be PAS-84 (Mw 20,000 g/mol, from Nittobo). The compound represented by Formula 3 may be PAS-2351 (Mw 25,000 g/mol, from Nittobo). The compound represented by Formula 4 may be PAS-A-1 (Mw 5,000 g/mol, from Nittobo), or PAS-A-5 (Mw 4,000 g/mol, from Nittobo). The compound represented by Formula 5 may be PAS-J-81 (Mw 180,000 g/mol, from Nittobo).

The additive may include a fourth additive for controlling the growth direction and refining particles of the copper layer 11.

The fourth additive may induce microcrystal grains in the copper layer 11, which may improve the heat resistance, weldability, and tensile strength of the copper layer 11.

The concentration of the fourth additive may be 0.1 ppm to 20 ppm, 0.1 ppm to 15 ppm, 0.1 ppm to 12 ppm, or 1 ppm to 10 ppm. When this range is satisfied, a sharp increase in the roughness of the copper layer 11 is suppressed, which may prevent a decrease in the strength of the copper foil 10.

The fourth additive may include a protein derivative. The protein derivative may include at least one of collagen, collagen peptide, and gelatin.

The protein derivative may have a weight average molecular weight of 1,000 g/mol to 10,000 g/mol. When the range is satisfied, the surface flattening of the copper layer 11 may be improved, and the generation of bubbles and voids on the surface of the copper layer 11 due to an increase in the viscosity of the electrolyte solution 40 may be suppressed.

The content of hydrogen peroxide (H₂O₂) in the electrolyte solution 40 may be 1 ml/L to 10 ml/L, 1 ml/L to 9.5 ml/L, 1 ml/L to 9.2 ml/L, or 1 ml/L to 9 ml/L.

The concentration of silver (Ag) in the electrolyte solution 40 may be 0.1 ppm to 10 ppm, 0.1 ppm to 9.5 ppm, 0.1 ppm to 9 ppm, or 0.1 ppm to 8 ppm.

The concentration of cerium (Ce) in the electrolyte solution 40 may be 2 ppm to 10 ppm, 2 ppm to 9.5 ppm, 2 ppm to 9 ppm, or 2 ppm to 8 ppm.

The concentration of lead (Pb) in the electrolyte solution 40 may be 1 ppm to 20 ppm, 1 ppm to 19 ppm, 1 ppm to 18 ppm, or 1 ppm to 15 ppm.

The concentration of molybdenum (Mo) in the electrolyte solution 40 may be 25 ppm or less, 20 ppm or less, 15 ppm or less, or 0.1 ppm to 25 ppm.

The concentration of nickel (Ni) in the electrolyte solution 40 may be 15 ppm to 150 ppm, 15 ppm to 130 ppm, 15 ppm to 120 ppm, or 15 ppm to 100 ppm.

The concentration of tungsten (W) in the electrolyte solution 40 may be 0.3 ppm to 5 ppm, 0.3 ppm to 4.5 ppm, 0.3 ppm to 4.2 ppm, or 0.3 ppm to 4 ppm.

The concentration of cobalt (Co) in the electrolyte solution 40 may be 330 ppm or less, 320 ppm or less, 300 ppm or less, or 100 ppm to 330 ppm.

The concentration of iron (Fe) in the electrolyte solution 40 may be 300 ppm or less, 280 ppm or less, 250 ppm or less, or 0.1 ppm to 300 ppm.

The concentration of arsenic (As) in the electrolyte solution 40 may be 0.5 ppm to 5 ppm, 0.5 ppm to 4.5 ppm, 0.5 ppm to 4.2 ppm, or 0.5 ppm to 4 ppm.

The concentrations of silver, cerium, lead, molybdenum, nickel, tungsten, cobalt, iron, and arsenic described above include all atoms present in ions and molecules.

When this range is satisfied, the uniformity and strength of the copper metal crystal grains formed on the surface of the copper foil 10 may be improved, so that even after a process of forming an active material layer on the copper foil 10 is performed, the change in the elongation value of the copper foil 10 may satisfy the range of -3% to +1%. As a result, mechanical stability may be maintained even during the active material's pressure, drying, roll-press, and winding processes, so the occurrence of defects such as fracture, wrinkling, and cracks in the copper foil 10 may be suppressed.

When forming the copper layer 11, the flow rate of the electrolyte solution 40 supplied into the electrolytic bath 30 may be 35 m³/hour to 46 m³/hour, 37 m³/hour to 46 m³/hour, 39 m³/hour to 46 m³/hour, or 41 m³/hour to 45 m³/hour. When the range is satisfied, the electrolyte solution 40 is filtered during the circulation process of the electrolyte solution 40, so that solid impurities present in the electrolyte solution 40 may be removed while electroplating for forming the copper layer 11 is being performed.

A flow rate deviation of the electrolyte solution 40 may be controlled to be 5% or less, 4% or less, 3% or less, or 2% or less per unit time (second). When the range is satisfied, the copper layer 11 may be uniformly formed, and the weight deviation of the manufactured copper foil 10 may be minimized.

To remove impurities from the surface of the copper layer 11, water washing may be performed in a washing tank. To remove impurities from the surface of the copper layer 11, acid cleaning may be performed, and then water cleaning may be performed to remove the acidic solution used for the acid cleaning.

The method of manufacturing the copper foil 10 may include a step of forming a protective layer 12 on the copper layer 11. The copper layer 11 may be immersed in an anticorrosion solution 70. The copper layer 11 may be guided by a guide roll disposed in the anticorrosion solution 70 when being immersed in the anticorrosion solution 70.

The anticorrosion solution 70 may include at least one of a chromium compound, a silane compound, and a nitrogen compound. When forming the protective layer 12 on the copper layer 11, a method of immersing the copper layer 11 in a potassium dichromate solution of 1 g/L to 10 g/L at room temperature for 1 to 30 seconds may be performed. The protective layer 12 may include a silane compound by silane treatment, and may include a nitrogen compound by nitrogen treatment. The copper foil 10 may be manufactured by forming the protective layer 12.

Hereinafter, the present disclosure is described in more detail based on Examples and Comparative Examples. However, the following Examples and Comparative Examples are only examples for explaining the present disclosure in more detail, and the present disclosure is not limited by the following Examples and Comparative Examples.
- Stress-relief agent #1: Hydroxyethylene cellulose (HEC, Mw 250,000 g/mol)
- Stress-relief agent #2: Hydroxyethylene cellulose (HEC, Mw 500,000 g/mol)
- Crystal growth regulator: Polyethylene glycol (PEG, Mw 6,000 g/mol)

### Examples

### Example 1

A copper foil was manufactured using a foil-making machine including an electrolytic bath 30, a rotating cathode drum 60 disposed in the electrolytic bath 30, and a positive electrode plate 50 disposed apart from the rotating cathode drum 60.

The electrolyte solution 40 was a copper sulfate solution, wherein the concentration of copper ions in the electrolyte solution 40 was set to 87 g/L and the concentration of sulfuric acid was 110 g/L, and the temperature of the electrolyte solution 40 was set to 55 °C and the current density was set to 60 ASD (A/dm²). In addition, the concentration of chlorine (Cl) included in the electrolyte solution 40 was maintained at 20 ppm.

10 ppm of bis-(3-sulfopropyl)-disulfide disodium salt (SPS) and 8 ppm of a triallylmethyl ethyl ammonium ethyl sulfide maleic acid copolymer (PAS-2451, Mw 30,000 g/mol, from Nittobo) were contained in the electrolyte solution 40. In addition, 2 ppm of the stress-relief agent #1 and 8 ppm of a crystal growth regulator were contained in the electrolyte solution 40. Here, the ratio of the stress-relief agent to the crystal growth regulator was 1:4.

A current was applied between the rotating cathode drum 60 and the positive electrode plate 50 at a current density of 60 ASD to manufacture the copper layer 11. Next, the copper layer 11 was immersed in an anticorrosion solution 70 for about 2 seconds. The anticorrosion solution 70 contained chromic acid as a main component, and the concentration of the chromic acid was 5 g/L.

Next, a protective layer was formed by performing chromate treatment on both surfaces of the copper layer 11, thereby manufacturing the copper foil 10 having a thickness of 6 µm.

### Examples 2 to 12 and Comparative Examples 1 to 5

Copper foils were manufactured under the same process conditions as in Example 1, except that the main compositions of each electrolyte solution and the content of each composition were applied as described in Table 1 below, and the thickness of the manufactured copper foil was adjusted.

**[Table 1]**

| Classification | Chlorine (ppm) | SPS (ppm) | PAS-2451 (ppm) | Stress-relief agent #1 (ppm) | Stress-relief agent #2 (ppm) | Crystal growth regulator (ppm) | Copper foil thickness (µm) |
|---|---|---|---|---|---|---|---|
| Example 1 | 20 | 10 | 8 | 2 | - | 8 | 6 |
| Example 2 | 20 | 10 | 8 | 0.5 | - | 5 | 6 |
| Example 3 | 20 | 10 | 8 | 1 | - | 4 | 6 |
| Example 4 | 20 | 10 | 8 | 0.5 | - | 2 | 6 |
| Example 5 | 20 | 10 | 8 | 0.6 | - | 6 | 6 |
| Example 6 | 20 | 10 | 8 | 0.6 | - | 2.4 | 8 |
| Example 7 | 20 | 10 | 8 | 0.8 | - | 3.2 | 8 |
| Example 8 | 20 | 10 | 8 | 1 | - | 8 | 8 |
| Example 9 | 20 | 10 | 8 | 1 | - | 7 | 8 |
| Example 10 | 20 | 10 | 8 | 1.5 | - | 6 | 10 |
| Example 11 | 20 | 10 | 8 | 0.8 | - | 6.4 | 10 |
| Example 12 | 20 | 10 | 8 | 0.5 | - | 3.5 | 10 |
| Comparative Example 1 | 20 | 10 | 8 | - | - | - | 6 |
| Comparative Example 2 | 20 | 10 | 8 | - | 10 | - | 6 |
| Comparative Example 3 | 20 | 10 | 8 | 8 | - | 8 | 6 |
| Comparative Example 4 | 20 | 10 | 8 | - | 20 | - | 8 |
| Comparative Example 5 | 20 | 10 | 8 | 10 | - | - | 10 |

### Experimental Examples

### Experimental Example 1 - Elongation change value

Samples of copper foils manufactured in Examples 1 to 12 and Comparative Examples 1 to 5 were prepared respectively. For each sample, the first elongation was measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.

An active material slurry was applied to each copper foil manufactured in Examples 1 to 12 and Comparative Examples 1 to 5. The active material slurry was mixed with 2 parts by weight of styrene-butadiene rubber (SBR) and 2 parts by weight of carboxymethyl cellulose (CMC) with respect to 100 parts by weight of graphite. The active material slurry was uniformly applied on the copper foil in a roll-to-roll method and in a Machine Direction (MD) and then dried. The coating amount of the active material slurry was about 16 mg/cm², and the thickness was about 100 µm.

After the active material slurry was dried, a roll press process was performed under conditions of a roll gap of 6 µm, a speed of 1 m/min, a linear pressure of 1,000 kgf/cm, and a pressing force of 2,500 kgf to prepare a copper foil on which an active material layer having a density of about 1.5 g/cm3 was formed. After removing the active material layer, the second elongation of the copper foil was measured in the same manner as the first elongation measurement method, and the results are shown in Table 2 below.

### Experimental Example 2 - Discharge capacity evaluation

For each negative electrode manufactured in Experimental Example 1, a metal lithium foil having a thickness of 0.4 mm was used as a counter electrode (positive electrode). A polypropylene sheet having a thickness of 0.1 mm was used as a separator, and a coin-type half-cell was manufactured by using a solution, in which 1 M of LiPF₆ was dissolved in a solvent containing ethylene carbonate and ethyl methyl carbonate mixed in a volume ratio of 3:7, as an electrolyte solution.

Each of the coin-type half-cells was charged with a constant current of 0.1C until the voltage reached 0.01V, and a process of discharging with a constant current of 0.1C until the voltage reached 1.5V was performed three times to proceed with a stabilization process of the battery.

Next, each of the coin-type half-cells was charged with a constant current of 0.5C until the voltage reached 0.01V, and a process of discharging with a constant current of 0.5C until the voltage reached 1.0V was performed 100 times, and a discharge capacity retention rate after 100 charge/discharge cycles compared to the first cycle was measured according to the following equation. An average value according to the results of three repeated measurements was evaluated according to the following criteria, and the results are shown in Table 2 below. [Equation] 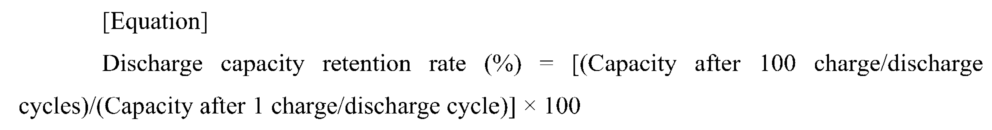 Discharge capacity retention rate (%) = [(Capacity after 100 charge/discharge cycles)/(Capacity after 1 charge/discharge cycle)] × 100
- Excellent: Discharge capacity retention rate of 95 % or more
- Suitable: Discharge capacity retention rate of 90 % or more and less than 95 %
- Unsuitable: Discharge capacity retention rate of less than 90 %

### Experimental Example 3 - Fracture evaluation

Each of the coin-type half-cells manufactured in Experimental Example 2 was disassembled after 100 charge/discharge cycles, and whether or not the copper foil was fractured was visually observed. The evaluation was performed according to the following criteria, and the results are shown in Table 2 below.
- Good: No fracture occurred in the copper foil
- Poor: Fracture occurred in the copper foil

### Experimental Example 4 - Evaluation of occurrence of wrinkles and/or tearing

Each of the coin-type half-cells manufactured in Experimental Example 2 was disassembled after being charged/discharged 100 times, and whether or not wrinkles and/or tearing of the copper foil occurred was visually observed.
- Good: No wrinkles and tearing occurred in the copper foil
- Poor: Wrinkles or tearing occurred in the copper foil

**[Table 2]**

| Classification | First elongation (%) | Second elongation (%) | Elongation change value¹⁾ (%) | Discharge capacity evaluation | Fracture occurrence evaluation | Wrinkle and/or tear occurrence evaluation |
|---|---|---|---|---|---|---|
| Example 1 | 4.7 | 3.5 | -1.2 | Suitable | Good | Good |
| Example 2 | 3.7 | 3.4 | -0.3 | Excellent | Good | Good |
| Example 3 | 4.6 | 3.6 | -1.0 | Excellent | Good | Good |
| Example 4 | 4.5 | 3.7 | -0.8 | Excellent | Good | Good |
| Example 5 | 3.6 | 3.2 | -0.4 | Excellent | Good | Good |
| Example 6 | 7.6 | 7.8 | +0.2 | Excellent | Good | Good |
| Example 7 | 7.7 | 7.4 | -0.3 | Excellent | Good | Good |
| Example 8 | 4.4 | 2.8 | -1.6 | Suitable | Good | Good |
| Example 9 | 11.5 | 10.7 | -0.8 | Excellent | Good | Good |
| Example 10 | 8.1 | 8.3 | +0.2 | Excellent | Good | Good |
| Example 11 | 4.4 | 4.2 | -0.2 | Excellent | Good | Good |
| Example 12 | 14.5 | 13.2 | -1.3 | Suitable | Good | Good |
| Comparative Example 1 | 4.6 | 0.4 | -4.2 | Unsuitable | Poor | Poor |
| Comparative Example 2 | 3.3 | 4.5 | +1.2 | Unsuitable | Poor | Good |
| Comparative Example 3 | 4.4 | 1.1 | -3.3 | Unsuitable | Poor | Good |
| Comparative Example 4 | 7.5 | 4.0 | -3.5 | Unsuitable | Poor | Good |
| Comparative Example 5 | 8.0 | 5.5 | -3.5 | Unsuitable | Good | Poor |
| 1) Elongation change value: Second elongation - First elongation | | | | | | |

According to Tables 1 and 2, in the copper foils according to Examples 1 to 12, the elongation change value after the roll press satisfies the range of -3 % to +1 %, compared to the initial elongation.

Due to such stable elongation retention characteristics, it was confirmed that, when applied as a current collector of a secondary battery, mechanical damage such as wrinkles, tearing, and fracture did not occur, and discharge capacity and battery life characteristics were also improved.

A copper foil according to the present disclosure satisfies a change in elongation value of -3% to +1% before and after the formation of an active material layer. Accordingly, mechanical damage to the copper foil such as wrinkling, tearing, and fracture during the active material layer formation process can be prevented.

In the copper foil according to the present disclosure, adhesive strength can be maintained at the interface with the active material layer, and stress concentration can be dispersed, thereby reducing electrical contact resistance. In addition, stress can be absorbed at the interface, so peel resistance can be improved.

In the copper foil according to the present disclosure, phenomena such as the detachment of the active material layer or the generation of cracks on the active material layer can be suppressed even in environments with physical and/or chemical changes, such as lead tab welding, lamination processes, and stacking, during the manufacturing of a secondary battery. In addition, during the repeated charge-discharge cycles of a secondary battery, the stress absorption capability of the copper foil is improved against volume changes in the active material layer and expansion pressure from the active material layer, which can increase the lifespan of the secondary battery.

In the copper foil according to the present disclosure, dimensional stability is improved, so the warping phenomenon can be suppressed, and manufacturing quality in the secondary battery manufacturing process can be secured. In addition, because micro-cracks or lifting do not occur in the active material layer formed on the copper foil, the phenomenon of the electrolyte penetrating into the active material layer can be suppressed.

### [Description of Symbols]

10: copper foil
11: copper layer
12: protective layer
15: negative electrode active material layer
20: positive electrode current collector
25: positive electrode active material layer
30: electrolytic bath
40: electrolyte solution
50: positive electrode plate
51: first positive electrode plate
52: second positive electrode plate
60: rotating cathode drum
70: anticorrosion solution
100: negative electrode
200: positive electrode
300: electrolyte
400: separator
1000: secondary battery

## Claims

1. A copper foil, comprising: a copper layer,
wherein the copper foil has an elongation change value of -3 % to +1 % according to Measurement Method 1 below:
[Measurement Method 1]
1) For the copper foil, a first elongation is measured using a universal testing machine from Instron Corp. according to IPC-TM-650
2) After an active material slurry is applied to the copper foil, a roll press process is performed under conditions of a roll gap of 6 µm, a speed of 1 m/min, a linear pressure of 1,000 kgf/cm, and a pressing force of 2,000 kgf to 3,000 kgf to form an active material layer on the copper foil.
3) After the active material layer is removed, a second elongation of the copper foil is measured in the same manner as the measurement method of the first elongation.
4) An elongation change value is calculated according to Equation 1 below: [Equation 1] $Elongation change value = Second elongation - First elongation$

2. The copper foil according to claim 1, wherein the elongation change value is -2 % to + 0.5 %.

3. The copper foil according to claim 1 or 2, wherein the first elongation is 2 % to 15 %.

4. The copper foil according to any one of the preceding claims, wherein the copper layer comprises a stress-relief agent comprising a cellulose derivative and a crystal growth regulator comprising a non-ionic water-soluble polymer.

5. The copper foil according to any one of the preceding claims, wherein the copper foil comprises a protective layer formed on at least one surface of the copper layer, and
the protective layer comprises at least one of a chromium compound, a silane compound, and a nitrogen compound.

6. The copper foil according to any one of the preceding claims, wherein a Strength-Elongation Index (SEI) according to Equation 2 below is 150 to 350: [Equation 2] $SEI \left(unit omitted\right) = TS \left({kgf / mm}^{2}\right) \times E 1 \left(%\right)$ where TS is a tensile strength of the copper foil at room temperature, and El is the First elongation.

7. The copper foil according to any one of the preceding claims, wherein a Relative Elongation Index (REI) according to Equation 3 below is 0.05 to 0.15: [Equation 3] $REI \left(unit omitted\right) = E 1 \left(%\right) / TS \left({kgf / mm}^{2}\right)$ where TS is a tensile strength of the copper foil at room temperature, and El is the First elongation.

8. An electrode, comprising:
a current collector comprising a copper foil according to any one of the preceding claims; and
an active material layer formed on at least one surface of the current collector.

9. The electrode according to claim 8, wherein an Electrode Stress Index (ESI) according to Equation 4 below is 5 or more: [Equation 4] 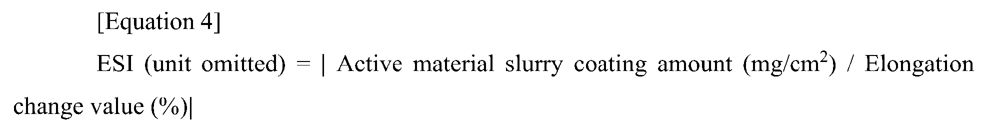 ESI (unit omitted) = | Active material slurry coating amount (mg/cm2) / Elongation change value (%)| where a case where the elongation change value is 0 is excluded.

10. The electrode according to claim 8 or 9, wherein a ratio of a thickness of the current collector to a total thickness of the electrode is 1 % to 12 %.

11. A secondary battery, comprising:
a negative electrode according to any one of claims 8 to 10;
a positive electrode;
an electrolyte; and
a separator interposed between the negative electrode and positive electrode.

12. The secondary battery according to claim 11, wherein a contact angle between the negative electrode and the electrolyte is 50° or less.
